(19) Europäisches Patentamt
European Patent Office
Office européen des brevets

(11) **EP 3 617 820 B1**

(12) **FASCICULE DE BREVET EUROPEEN**

(45) Date de publication et mention
de la délivrance du brevet:
**12.05.2021 Bulletin 2021/19**

(51) Int Cl.:
***G05B 19/414*** *(2006.01)*    ***H02J 1/12*** *(2006.01)*
***H04L 12/403*** *(2006.01)*

(21) Numéro de dépôt: **19193984.2**

(22) Date de dépôt: **28.08.2019**

(54) **PROCÉDÉ ET SYSTÈME DE SYNCHRONISATION**

SYNCHRONISIERUNGSVERFAHREN UND SYSTEM

SYNCHRONISATION METHOD AND SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.08.2018 FR 1800913**

(43) Date de publication de la demande:
**04.03.2020 Bulletin 2020/10**

(73) Titulaire: **Thales**
**92400 Courbevoie (FR)**

(72) Inventeurs:
 • **ANDRADE ALFONSECA, Damian**
  **78401 Chatou Cedex (FR)**
 • **TEIXEIRA, Tony**
  **78401 Chatou Cedex (FR)**
 • **GUGUEN, Stéphane**
  **78401 Chatou cedex (FR)**

(74) Mandataire: **Marks & Clerk France**
**Immeuble "Visium"**
**22, avenue Aristide Briand**
**94117 Arcueil Cedex (FR)**

(56) Documents cités:
**DE-B3-102010 064 123    US-B2- 7 432 674**

EP 3 617 820 B1

**Description**

L'invention concerne un procédé et un système pour synchroniser plusieurs équipements communiquant entre eux. Elle trouve son application pour synchroniser des onduleurs et/ou des redresseurs utilisés pour produire de l'énergie (puissance) à une machine tournante.

La synchronisation de plusieurs équipements pouvant fonctionner avec des horloges présentant des dérives dans le temps différentes et faisant partie d'un ensemble est un problème lorsqu'il faut piloter simultanément ces équipements.

La synchronisation de plusieurs onduleurs est un problème rencontré lorsque l'on souhaite piloter simultanément plusieurs onduleurs fonctionnant en parallèle pour alimenter une même charge, une même machine tournante, par exemple.

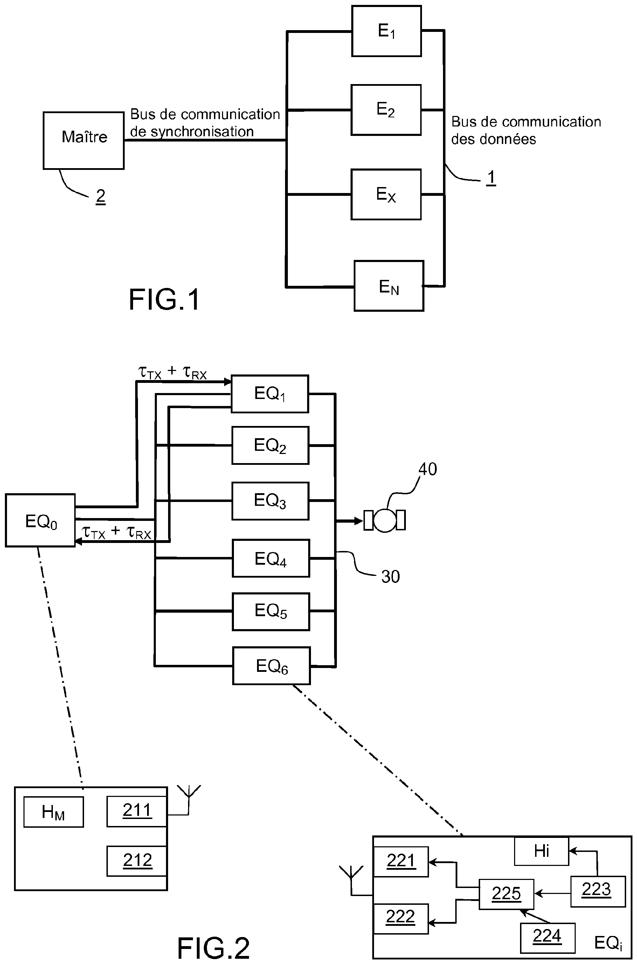

Dans la plupart des cas, comme il est illustré à la figure 1, la synchronisation des équipements $E_1, \dots E_N$, se fait à partir d'un bus de communication dédié 1, par l'intermédiaire d'un signal d'horloge, avec la présence d'un équipement 2 jouant le rôle de maître pour l'horloge. En cas de perte de communication avec l'équipement maître ou en cas de défaillance de ce dernier, la synchronisation est perdue. Dans le cas d'application de fourniture de puissance dans un système où les équipements sont en liaison par des câbles de puissance, cela peut conduire à une perte d'énergie (retours de courant) qui va non plus vers la machine à piloter mais vers les autres onduleurs. Cette circulation d'énergie peut alors conduire à des endommagements du système.

Pour éviter ces problèmes, il est connu d'utiliser des connexions filaires dédiées pour la synchronisation des équipements. Une horloge « pure » est utilisée pour cadencer les équipements à la même vitesse.

Une autre solution consiste à utiliser un ou plusieurs équipements maîtres possédant une horloge dédiée ou un bus de communication dédié. Dans le cas d'un bus de communication dédié, le nombre de connexions et de câblages est augmenté. Ceci génère un encombrement dans des systèmes où l'espace prévu pour les équipements est de plus en plus réduit.

Un autre inconvénient résulte dans le fait qu'un ou plusieurs équipements peuvent être entièrement dédiés à une fonction et qu'ils ne peuvent alors jouer le rôle de maître.

Dans la suite de la description, l'expression « équipement maître » correspond à un équipement qui est configuré pour gérer l'état de synchronisation des autres équipements.

Le document US 7432674 divulgue la synchronisation entre plusieurs équipements qui livrent un signal de commande à un dispositif et le calcul de une valeur d'écart entre une valeur d'horloge de référence et l'horloge locale d'un équipement.

L'invention concerne un procédé de synchronisation de plusieurs équipements EQi comprenant chacun une horloge Hi réglée sur un oscillateur à quartz, lesdits équipements EQi communiquant entre eux en utilisant un protocole de communication, les équipements étant configurés pour délivrer un signal de commande à un dispositif. Le procédé est caractérisé en ce qu'il comporte au moins les étapes suivantes pour un cycle de synchronisation:

- Au niveau de chaque équipement générant le signal de commande, calculer une valeur d'écart ΔH existant entre une valeur d'horloge de référence Hm et l'horloge locale Hi d'un équipement, en comparant la valeur du top d'horloge à un instant donné pour l'équipement à la valeur du top d'horloge pour l'horloge de référence,

- Lors de la détection d'un déphasage ΔH entre la valeur d'horloge de référence et la valeur d'une horloge locale,

  - lorsque la valeur de déphasage ΔH entre l'horloge locale et l'horloge de référence correspond à un cycle de rafraîchissement de l'horloge de référence Hm, on définit une heure d'horloge corrigée Hic en répétant un chiffre du top d'horloge de parité donnée si la valeur de l'horloge locale est en avance et on définit une heure d'horloge corrigée en sautant un chiffre du top d'horloge de parité opposée à la première parité si la valeur de l'horloge locale est en retard,
  - lorsque la valeur de déphasage ΔH est supérieure à un cycle de rafraîchissement, le procédé recale l'heure de référence,

- On utilise une valeur corrigée de l'horloge au niveau de chaque équipement pour émettre le signal de commande.

La parité est définie pour un cycle de synchronisation, paire ou impaire.

Selon une variante, on répète le cycle de synchronisation avec une fréquence Fs définie de la manière suivante :

$$F_S = MAX(|F_{SMIN}|, |F_{SMAX}|)$$

où

$$F_{SMAX} = \frac{F_0(1 + \varepsilon_1) - F_1(1 - \varepsilon_2)}{2}$$

$$F_{SMIN} = \frac{F_0(1 - \varepsilon_1) - F_1(1 + \varepsilon_2)}{2}$$

$F_S = F_0 (\varepsilon_1 + \varepsilon_2)/2$ si la fréquence nominale des oscillateurs est identique,

Si l'erreur des oscillateurs est aussi identique, la période de rafraîchissement est de Fs = $F_0 \times \varepsilon$, avec $F_0$ la fréquence correspondant à un équipement émettant l'horloge de référence et $F_1$ la fréquence d'un équipement esclave, $\varepsilon_0$ et $\varepsilon_1$ la précision de l'oscillateur.

Le procédé peut comporter une étape de calibration comprenant les étapes suivantes :

Lorsqu'un équipement s'incorpore dans un réseau, celui-ci envoie un message $M(EQ_i)$ contenant l'heure d'émission $T_0$ à tous les abonnés du réseau,

Lorsque l'équipement $EQ_i$ émetteur du message reçoit à nouveau le message, il compare l'heure contenue dans le message et l'heure locale, et détermine le temps de propagation du message entre lui-même et un équipement du réseau,

L'équipement souhaitant intégrer le réseau mémorise le ou les temps de propagation calculés pour communiquer avec les autres équipements (onduleurs) du réseau.

L'horloge de référence Hm est, par exemple, émise par un équipement désigné initialement maître.

En cas de perte de la réception de l'horloge émise par le maître, un équipement ayant la priorité la plus élevée dans le réseau prend le rôle de maître et utilise son horloge locale comme horloge de référence pour les autres équipements.

Selon un mode de réalisation, le signal de commande émis est une puissance fournie par un équipement onduleur adapté à fournir de l'énergie à une machine tournante.

L'invention concerne aussi un système pour synchroniser l'émission de données entre plusieurs équipements communiquant entre eux au moyen d'un lien physique de communication caractérisé en ce que chaque équipement comprend au moins les éléments suivants :

• Un émetteur, un récepteur, un compteur adapté à compter les tops d'une horloge locale, une horloge locale, une mémoire mémorisant des temps de propagation de message, un processeur adapté à exécuter les étapes du procédé selon l'invention,

• Un équipement étant configuré pour jouer le rôle de maître et fournir une horloge de référence.

Selon une application, un équipement est un onduleur adapté à fournir de l'énergie à une machine tournante.

D'autres caractéristiques et avantages de la présente invention apparaîtront mieux à la lecture de la description d'exemples de réalisation donnés à titre illustratif et nullement limitatif, la description étant annexée des figures qui représentent :

• Figure 1, un exemple d'architecture selon l'art antérieur,

• Figure 2, un exemple d'architecture selon l'invention et une illustration de l'étape de calibration,

• Figure 3, une représentation des échanges de message entre un équipement maître et les autres éléments du réseau, et

• Figure 4, un schéma du calcul de la correction d'erreur d'horloge effectuée au niveau de chacun des équipements du réseau.

Afin de mieux faire comprendre le procédé selon l'invention, la description qui suit est donnée à titre illustratif et nullement limitatif pour la synchronisation de plusieurs onduleurs ayant notamment pour fonction de fournir de la puissance (énergie) à une machine tournante. Cette description pourra être adaptée par un homme du métier pour toute application en dehors du domaine technique des onduleurs, dès qu'il y aura plusieurs équipements communiquant entre eux à synchroniser.

La figure 2 illustre un exemple d'architecture comprenant un élément maître ayant sa propre horloge qui communique avec plusieurs onduleurs.

Un équipement, initialement désigné maître $EQ_0$, comprend un émetteur 211 et un récepteur 212 pour communiquer avec les onduleurs $EQ_1$, $EQ_2$, ..., $EQ_5$, $EQ_6$ du système. L'équipement maître fonctionne avec sa propre horloge Hm.

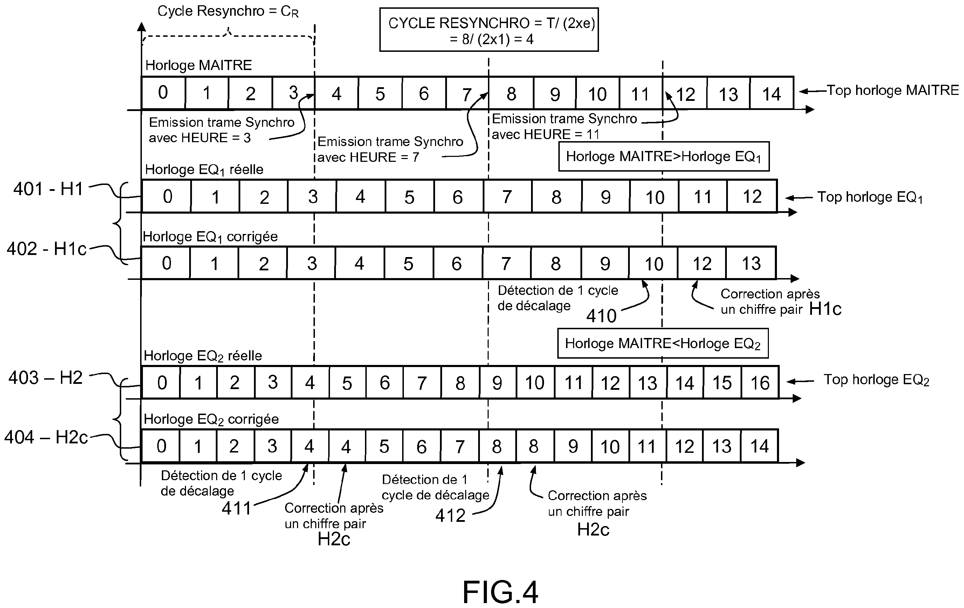

Un onduleur $EQ_1$, $EQ_2$,..., $EQ_5$, $EQ_6$ comprend un émetteur 221, un récepteur 222, un compteur 223 adapté à compter les tops d'horloge comme il sera détaillé à la figure 4, une horloge propre Hi avec i=1 à 6 dans l'exemple donné, une mémoire 224 adaptée par exemple à mémoriser le temps de propagation des messages et d'autres paramètres, et un processeur 225 configuré pour exécuter les étapes du procédé selon l'invention et décider notamment si le compteur est modifié ou non.

Dans l'exemple donné, on fait l'hypothèse que tous les onduleurs du réseau connaissent la topologie du réseau ou qu'ils ont le moyen de trouver la topologie automatiquement, i.e., le nombre d'onduleurs présents, leurs caractéristiques techniques, leur positionnement dans le système et qu'ils sont capables, lors d'une phase de calibration, de calculer et de mémoriser le temps de propagation d'un message vers un autre onduleur du système afin de pouvoir communiquer avec ce dernier.

Les onduleurs sont reliés par des câbles de puissance 30 à une machine tournante 40 afin de délivrer à cette dernière l'énergie nécessaire à son fonctionnement.

Dans un premier exemple de réalisation, un équipement joue le rôle de maître.

Le procédé va comporter par exemple une phase de calibration. Lorsqu'un nouvel équipement va vouloir faire partie du réseau constitué d'un maître et de plusieurs onduleurs esclaves, l'équipement envoie un message contenant une heure d'émission à tous les équipements abonnés (déjà présents) du réseau. Pour cela, le nouvel équipement utilise un protocole de communication connu de l'homme du métier et qui ne sera pas détaillé.

Par exemple, lorsque l'onduleur $EQ_1$ s'incorpore dans le réseau, le nouvel onduleur envoie un message $M(EQ_1)$ contenant l'heure d'émission $T_0$ à tous les abonnés du réseau. Chaque équipement, $EQ_i$, avec i différent de 1, présent dans le réseau répond à l'onduleur $EQ_1$ et copie dans sa mémoire le message qu'il a reçu. Le temps d'émission du message $M(EQ_1)$ émis par l'onduleur $EQ_1$ est $T_{TX}$ et le temps de réception du message $M(EQ_1)$ par les autres onduleurs $EQ_i$ présents dans le réseau est $T_{RX}$. Le délai de retour est égal à $T_{TX}+T_{RX}$.

Lorsque l'onduleur $EQ_1$, émetteur du message $M(EQ_1)$, reçoit à nouveau le message (un message par onduleur récepteur), il compare l'heure contenue dans le message reçu et l'heure locale donnée par son horloge.

Le temps de propagation $T_P$ d'un message est égal à $\frac{(T1-T0)}{2} = T_{TX} + T_{RX}$, avec $T_1$ l'heure contenue dans le message émis par un onduleur du système et $T_0$ l'heure contenue dans le message émis initialement par l'onduleur qui cherche à entrer dans le système L'onduleur qui cherche à entrer dans le système garde en mémoire le temps de propagation calculé pour chaque onduleur qui est connecté avec lui. Ceci lui permet de communiquer avec ces onduleurs au cours du fonctionnement du système.

Chaque onduleur peut conserver dans sa mémoire, un paramètre d'identification Id des onduleurs avec qui il est susceptible de communiquer, ainsi que le temps de propagation d'un message calculé.

Le système comporte une étape d'initialisation selon deux possibilités. Soit un équipement a été déclaré « maître », soit un équipement va se déclarer maître selon un paramètre donné.

Dans le cas où un onduleur a été désigné « maître », un onduleur esclave (onduleur du système qui n'a pas le rôle de maître et qui est géré par l'onduleur maître) reçoit l'heure du maître Hr au cours d'une étape d'initialisation. Chaque onduleur esclave a sa propre horloge Hi, avec son propre quartz, les oscillateurs des quartz ne sont pas parfaitement identiques et de fait les horloges Hi des onduleurs ont tendance à se désynchroniser.

Dans le cas où il n'y a pas d'équipement désigné maître, l'équipement (onduleur) ayant la priorité la plus élevée va prendre le rôle de maître et va fixer l'heure pour tous les onduleurs esclaves en tenant compte du temps de propagation du message préalablement calculé lors de la phase de calibration, par exemple. La notion de priorité correspond, par exemple, au numéro de l'équipement déclaré au sein du réseau, selon des principes connus de l'homme du métier.

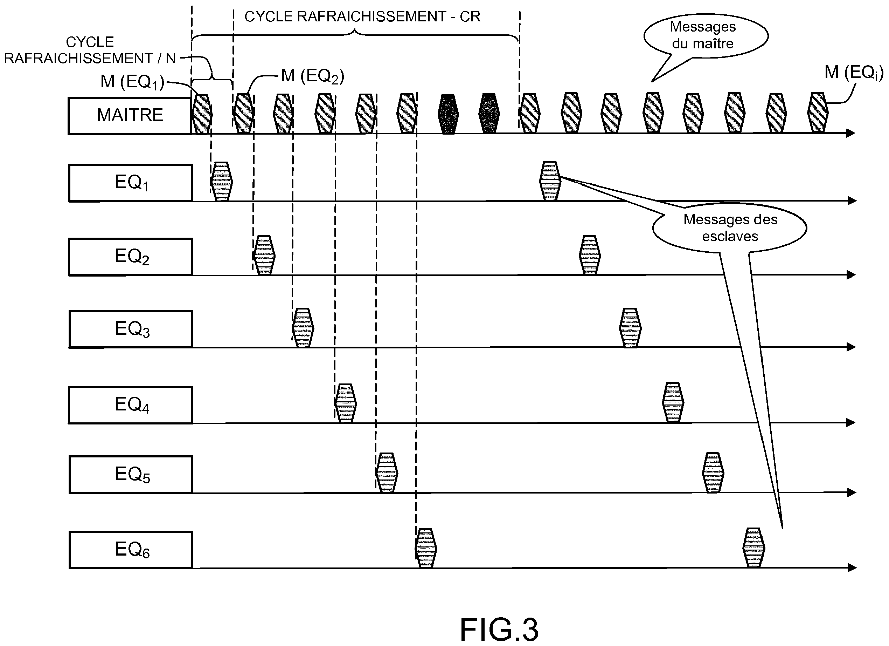

La figure 3 illustre un exemple de séquence de la transmission de messages dans un système séquentiel où l'équipement maître transmet séquentiellement un premier message $M(EQ_1)$ vers le premier onduleur $EQ_1$, un deuxième message $M(EQ_2)$ vers l'onduleur $EQ_2$, ...et ainsi de suite pour les N=6 onduleurs. L'envoi des messages $M(EQ_i)$ se fait selon un cycle de rafraîchissement $C_R$.

La figure 4 illustre le procédé de calcul de la correction d'une horloge réalisée au niveau de chaque équipement onduleur pour obtenir une synchronisation de l'ensemble des onduleurs du réseau.

Le procédé de correction selon l'invention comporte au moins les étapes suivantes :
L'onduleur maître émet une trame de synchronisation à des instants en suivant son horloge, et selon un cycle de resynchronisation $C_R$ ce qui est représenté sur la figure 4 par la ligne 400.

- Chaque onduleur esclave ($EQ_1$ et $EQ_2$ dans l'exemple) incrémente son horloge locale $H_1$, $H_2$, selon un cycle de synchronisation, 401, 403. Etant donné que les oscillateurs des quartz pour les deux onduleurs ne sont pas strictement identiques, les horloges des deux onduleurs ont tendance à se désynchroniser,
- La répétition du cycle de synchronisation Fs dépend de la fréquence $F_0$ fréquence du maître et $F_1$ fréquence de l'esclave et de la précision du quartz ($\varepsilon_0$ et $\varepsilon_1$) des onduleurs et de la période de l'oscillateur. La fréquence de synchronisation Fs pour garantir un cycle de décalage d'horloge est :

$$F_S = MAX(|F_{SMIN}|, |F_{SMAX}|)$$

avec

$$F_{SMAX} = \frac{F_0(1 + \varepsilon_1) - F_1(1 - \varepsilon_2)}{2}$$

$$F_{SMIN} = \frac{F_0(1 - \varepsilon_1) - F_1(1 + \varepsilon_2)}{2}$$

$F_S = F_0(\varepsilon_1 + \varepsilon_2)/2$ si la fréquence nominale des oscillateurs est identique.

Si l'erreur des oscillateurs est aussi identique, la période de rafraîchissement est de Fs = $F_0 \times \varepsilon$.

- Le message M émis par l'onduleur maître et reçu par un onduleur du système contient l'heure du maitre $H_M$ plus le temps de propagation du message maître transmettant son heure vers les onduleurs esclaves $EQ_1$, $EQ_2$. L'onduleur esclave détermine le déphasage $\Delta H$ entre l'heure du maître reçue 402, 404 et son heure locale H donnée par son horloge locale Hi, 401, 403.

- Si le déphasage ΔH mesuré entre l'horloge reçue et l'horloge locale d'un onduleur esclave est de un cycle, une correction se fait sur un chiffre ayant une parité choisie (pair ou impair), par exemple un chiffre pair ; la parité est choisie initialement pour un cycle de synchronisation,
- Dans le cas où l'onduleur esclave est en retard, le processeur indique au compteur de sauter un chiffre impair (ou pair si le premier chiffre est impair).

  - Par exemple, sur la figure 4, l'heure locale $H_1$ du premier onduleur $EQ_1$ comptabilisée au niveau du compteur correspond à la suite {0, 1, 2, ...}. L'heure reçue par cet onduleur $EQ_1$ et contenue dans le message émis par l'onduleur maître est {0, 1, 2, ....10, 12....}. On observe 410 qu'il y a un décalage d'un cycle entre l'horloge du maître $H_m$ et l'horloge locale $H_1$ de l'onduleur au niveau de l'émission de la trame de synchronisation à l'heure « 11 ». Dans ce cas, l'onduleur 22 va corriger son horloge locale à l'heure « 11 » et la remplacer $H_{1c}$ par l'heure « 12 » pour se recaler sur l'horloge maître. Le recalage se fait en comparant l'heure du maître et l'heure de l'esclave. L'esclave sera décalé d'au maximum un cycle par rapport au maître au bout d'un cycle de synchronisation.

- Si l'onduleur esclave est en avance, on répète un chiffre de parité donnée, la parité est fixée initialement, paire ou impaire,
  Par exemple sur la figure 4, le compteur détecte un cycle de décalage dans l'horloge locale $H_2$ de l'onduleur $EQ_2$ qui est en avance de l'horloge reçue dans le message émis par l'onduleur maître, 403, 404. Dans ce cas, l'onduleur esclave $EQ_2$ va se recaler sur l'horloge maître en modifiant l'heure indiquée $H_{2c}$, 411, « 4 » au lieu de « 5 », 412« 10 » par l'heure « 8 » indiquée dans le message du maître ;
- Si le déphasage entre l'horloge d'un onduleur esclave et l'horloge d'un maître est supérieur à un cycle, un recalage de l'heure est effectué afin de refixer l'heure. Ceci peut arriver en cas de perte des messages ;
- Chaque compteur d'horloge des onduleurs esclaves peut avoir des interruptions sur les chiffres pairs ou impairs selon le choix initial pour la parité, le procédé va déterminer comme fréquence utile des onduleurs esclaves la valeur $F_0/2$ ($F_0$ étant la fréquence nominal du maître).

En final, une fois l'horloge de chaque esclave corrigée, le procédé va pouvoir calculer, en utilisant par exemple une opération modulo, la fréquence à laquelle un onduleur va délivrer sa puissance à une machine tournante. Les horloges ayant été corrigées pour chaque onduleur, les puissances émises par chaque onduleur participent à la commande de la machine tournante et arrivent quasiment au même instant ($\pm 1/F_0$ de jitter) sur ladite machine tournante.
Les équipements onduleurs esclaves disposent d'une temporisation ou « timeout » pour détecter la perte de l'équipement maître. Si un équipement ne reçoit pas de message de la part de l'équipement maître dans une période TT, il considère que la communication avec l'équipement maître est perdue. Dans ce cas, c'est l'équipement ayant la priorité la plus élevée qui va prendre ce rôle de maître. Ceci est possible car tous les équipements du réseau sont capables de voir les trames, messages diffusés dans le réseau.
Le procédé de synchronisation selon l'invention présente l'avantage d'utiliser tout bus de communication existant afin de ne pas augmenter le câblage filaire. La perte d'un équipement n'entraîne pas la perte de la synchronisation du système, n'importe quel équipement du réseau est capable de prendre le relais en conservant le même état de synchronisation, le maître ayant été déconnecté du réseau.

**Revendications**

1. Procédé de synchronisation de plusieurs équipements EQi comprenant chacun une horloge Hi réglée sur un oscillateur à quartz, lesdits équipements EQi communiquant entre eux en utilisant un protocole de communication, les équipements étant configurés pour délivrer un signal de commande à un dispositif (40) comportant au moins les étapes suivantes pour un cycle de synchronisation:

   • Au niveau de chaque équipement générant le signal de commande, calculer une valeur d'écart ΔH existant entre une valeur d'horloge de référence Hm et l'horloge locale Hi d'un équipement, en comparant la valeur du top d'horloge à un instant donné pour l'équipement à la valeur du top d'horloge pour l'horloge de référence,
   • Lors de la détection d'un déphasage ΔH entre la valeur d'horloge de référence et la valeur d'une horloge locale, le procédé est caractérisé en plus par les étapes suivantes :

      • lorsque la valeur de déphasage ΔH entre l'horloge locale et l'horloge de référence correspond à un cycle de rafraîchissement de l'horloge de référence Hm, on définit une heure d'horloge corrigée Hic en répétant un chiffre du top d'horloge de parité donnée si la valeur de l'horloge locale est en avance et on définit une heure d'horloge corrigée en sautant un chiffre du top d'horloge de parité opposée à la première parité si la valeur de l'horloge locale est en retard,
      • lorsque la valeur de déphasage ΔH est supérieure à un cycle de rafraîchissement, recaler l'heure de référence,

• Puis utiliser une valeur corrigée de l'horloge au niveau de chaque équipement pour émettre le signal de commande.

2. Procédé de synchronisation selon la revendication 1 **caractérisé en ce que** l'on définit une parité paire ou impaire qui est conservée pendant un cycle de synchronisation.

3. Procédé de synchronisation selon la revendication 1 **caractérisé en ce que** l'on répète le cycle de synchronisation avec une fréquence Fs définie de la manière suivante :

$$F_S = MAX(|F_{SMIN}|, |F_{SMAX}|)$$

où

$$F_{SMAX} = \frac{F_0(1 + \varepsilon_1) - F_1(1 - \varepsilon_2)}{2}$$

$$F_{SMIN} = \frac{F_0(1 - \varepsilon_1) - F_1(1 + \varepsilon_2)}{2}$$

$F_S = F_0 (\varepsilon_1 + \varepsilon_2)/2$ si la fréquence nominale des oscillateurs est identique,
Si l'erreur des oscillateurs est aussi identique, la période de rafraîchissement est de $F_S = F_0 \times \varepsilon$, avec $F_0$ la fréquence correspondant à un équipement émettant l'horloge de référence et $F_1$ la fréquence d'un équipement esclave, $\varepsilon_0$ et $\varepsilon_1$ la précision de l'oscillateur.

4. Procédé de synchronisation selon l'une des revendications 1 à 3 **caractérisé en ce qu'**il comporte une étape de calibration comprenant les étapes suivantes :

Lorsqu'un équipement s'incorpore dans un réseau, celui-ci envoie un message $M(EQ_i)$ contenant l'heure d'émission $T_0$ à tous les abonnés du réseau,
Lorsque l'équipement $EQ_i$ émetteur du message reçoit à nouveau le message, il compare l'heure contenue dans le message et l'heure locale et détermine le temps de propagation du message entre lui-même et un équipement du réseau,
L'équipement souhaitant intégrer le réseau mémorise le ou les temps de propagation calculés pour communiquer avec les autres équipements, onduleurs, du réseau.

5. Procédé de synchronisation selon l'une des revendications précédentes **caractérisé en ce que** l'horloge de référence Hm est émise par un équipement désigné initialement maître.

6. Procédé de synchronisation selon la revendication 5 **caractérisé en ce qu'**en cas de perte de la réception de l'horloge émise par le maître, un équipement ayant la priorité la plus élevée dans le réseau prend le rôle du maître et utilise son horloge locale comme horloge de référence pour les autres équipements.

7. Procédé de synchronisation selon l'une des revendications 1 à 5 **caractérisé en ce que** le signal de commande émis est une puissance fournie par un équipement onduleur adapté à fournir de l'énergie à une machine tournante.

8. Système pour synchroniser l'émission de données entre plusieurs équipements communiquant entre eux au moyen d'un lien physique de communication, chaque équipement comprend au moins les éléments suivants :

• Un émetteur (221), un récepteur (222), un compteur (223) adapté à compter les tops d'horloge locale, une horloge locale, une mémoire (224) mémorisant des temps de propagation de message, un processeur (225) adapté à exécuter les étapes du procédé selon l'une des revendications 1 à 7,
• Un équipement étant configuré pour jouer le rôle de maître et fournir une horloge de référence.

9. Système selon la revendication 8 **caractérisé en ce qu'**un équipement est un onduleur adapté à fournir de l'énergie à une machine tournante.

**Patentansprüche**

1. Verfahren zum Synchronisieren mehrerer EQi-Geräte, die jeweils einen auf einem Quarzoszillator regulierten Taktgeber Hi umfassen, wobei die EQi-Geräte über ein Kommunikationsprotokoll miteinander kommunizieren, wobei die Geräte zum Anlegen eines Steuersignals an eine Vorrichtung (40) konfiguriert sind, das mindestens die folgenden Schritte für einen Synchronisationszyklus beinhaltet:

• Berechnen, an jedem das Steuersignal erzeugenden Gerät, eines Abweichungswertes ΔH, der zwischen einem Referenztaktwert Hm und dem lokalen Taktgeber Hi eines Geräts besteht, durch Vergleichen des Wertes des Taktimpulses zu einem gegebenen Zeitpunkt für das Gerät mit dem Wert des Taktimpulses für den Referenztakt,

• wobei das Verfahren **dadurch gekennzeichnet ist, dass** es bei der Erkennung einer Phasenverschiebung ΔH zwischen dem Referenztaktwert und dem Wert eines lokalen Takts zusätzlich die folgenden Schritte beinhaltet:

• Definieren, wenn der Wert der Phasenverschiebung ΔH zwischen dem lokalen Takt und dem Referenztakt einem Auffrischungszyklus des Referenztakts Hm entspricht, einer korrigierten Taktzeit Hic durch Wiederholen einer Ziffer des gegebenen Paritätstaktimpulses, wenn der Wert des lokalen Takts früh ist, und Definieren einer korrigierten Taktzeit durch Überspringen einer Ziffer des Paritätstaktimpulses gegenüber der ersten Parität, wenn der Wert des lokalen Takts spät ist,

• Zurücksetzen der Referenzzeit, wenn der Wert der Phasenverschiebung ΔH größer als ein Auffrischungszyklus ist,

• dann Verwenden, an jedem Gerät, eines korrigierten Taktwertes zum Senden des Steuersignals.

2. Synchronisationsverfahren nach Anspruch 1, **dadurch gekennzeichnet, dass** eine gerade oder ungerade Parität definiert wird, die während eines Synchronisationszyklus beibehalten wird.

3. Synchronisationsverfahren nach Anspruch 1, **dadurch gekennzeichnet, dass** der Synchronisationszyklus mit einer wie folgt definierten Frequenz Fs wiederholt wird:

$$F_S = MAX(|F_{SMIN}|, |F_{SMAX}|)$$

wo

$$F_{SMAX} = \frac{F_0(1 + \varepsilon_1) - F_1(1 - \varepsilon_2)}{2}$$

$$F_{SMIN} = \frac{F_0(1 - \varepsilon_1) - F_1(1 + \varepsilon_2)}{2}$$

$F_S = F_0 (\varepsilon_1 + \varepsilon_2)/2$, wenn die Nennfrequenz der Oszillatoren identisch ist,

wenn auch der Oszillatorenfehler identisch ist, ist die Auffrischungsperiode Fs = $F_0 \times \varepsilon$, wobei $F_0$ die Frequenz entsprechend einem Gerät ist, das den Referenztakt aussendet, und $F_1$ die Frequenz eines Sklave-Geräts ist, $\varepsilon_0$ und $\varepsilon_1$ die Genauigkeit des Oszillators sind.

4. Synchronisationsverfahren nach einem der Ansprüche 1 bis 3, **dadurch gekennzeichnet, dass** es einen Kalibrierungsschritt beinhaltet, der die folgenden Schritte umfasst:

wenn ein Gerät sich in ein Netzwerk inkorporiert, sendet dieses eine Nachricht M(EQ$_i$), die die Übertragungszeit T$_0$ enthält, an alle Netzwerkteilnehmer,

wenn das die Nachricht sendende EQ$_i$-Gerät die Nachricht wieder empfängt, vergleicht es die in der Nachricht enthaltene Zeit mit der lokalen Zeit, und bestimmt die Laufzeit der Nachricht zwischen sich selbst und einem Gerät des Netzwerks,

das Gerät, das das Netzwerk integrieren möchte, speichert die eine oder mehreren berechneten Laufzeiten zum Kommunizieren mit den anderen Geräten, Wechselrichtern, des Netzwerks.

5. Synchronisationsverfahren nach einem der vorherigen Ansprüche, **dadurch gekennzeichnet, dass** der Referenztakt Hm von einem zunächst als Master designierten Gerät ausgegeben wird.

6. Synchronisationsverfahren nach Anspruch 5, **dadurch gekennzeichnet, dass** bei Verlust des Empfangs des vom Master ausgegebenen Takts ein Gerät das die höchste Priorität im Netzwerk aufweist die Rolle des Masters übernimmt und seinen lokalen Takt als Referenztakt für die anderen Geräte verwendet.

7. Synchronisationsverfahren nach einem der Ansprüche 1 bis 5, **dadurch gekennzeichnet, dass** das ausgegebene Steuersignal eine Leistung ist, die von einem Wechselrichtergerät geliefert wird, das zum Versorgen einer rotierenden Maschine mit Energie ausgelegt ist.

8. System zum Synchronisieren des Sendens von Daten zwischen mehreren Geräten, die mittels einer physikalischen Kommunikationsverbindung miteinander kommunizieren, wobei jedes Gerät mindestens die folgenden Elemente umfasst:

• einen Sender (221), einen Empfänger (222), einen Zähler (223) zum Zählen der lokalen Taktimpulse, einen lokalen Taktgeber, einen Nachrichtenlaufzeiten speichernden Speicher (224), einen Prozessor (225) zum Durchführen der Schritte des Verfahrens nach einem der Ansprüche 1 bis 7,

• ein Gerät, das zum Übernehmen der Rolle des Masters und zum Bereitstellen eines Referenztakts konfiguriert ist.

9. System nach Anspruch 8, **dadurch gekennzeichnet, dass** ein Gerät ein Wechselrichter zum Versorgen einer rotierenden Maschine mit Energie ist.

**Claims**

1. A method for synchronizing several equipments EQi each comprising a clock Hi adjusted to a crystal oscillator, said equipments EQi communicating with each other using a communication protocol, the equipments being configured to deliver a command signal to a device (40), comprising at least the following steps for a synchronization cycle:

   • At each equipment generating the command signal, computing a value of difference ΔH existing between a reference clock value Hm and the local clock Hi of an equipment, by comparing the value of the clock signal at a given time for the equipment to the value of the clock signal for the reference clock,
   • On detecting a phase shift ΔH between the reference clock value and the value of a local clock, the method is, in addition, **characterized by** the following steps:
   • when the value of the phase shift ΔH between the local clock and the reference clock corresponds to a refresh cycle of the reference clock Hm, a corrected clock time Hic is defined by repeating a number of the clock pulse of given parity if the value of the local clock is early and a corrected clock time is defined by skipping one number of the clock signal of opposite parity to the first parity if the local clock value is late,
   • when the value of the phase shift ΔH is higher than a refresh cycle, resetting the reference time,
   • Then using a corrected value of the clock in each equipment to emit the command signal.

2. The synchronizing method according to claim 1, **characterized in that** an even or uneven parity that is preserved during a synchronization cycle is defined.

3. The synchronizing method according to claim 1, **characterized in that** the synchronization cycle is repeated with a frequency Fs defined in the following way:

$$F_S = MAX(|F_{SMIN}|, |F_{SMAX}|)$$

*where*

$$F_{SMAX} = \frac{F_0(1 + \varepsilon_1) - F_1(1 - \varepsilon_2)}{2}$$

$$F_{SMIN} = \frac{F_0(1 - \varepsilon_1) - F_1(1 + \varepsilon_2)}{2}$$

$F_S = F_0 (\varepsilon_1 + \varepsilon_2)/2$ if the nominal frequency of the oscillators is identical,
if the error of the oscillators is also identical, the refresh period is $Fs = F_0 \times \varepsilon$,
with $F_0$ the frequency corresponding to an equipment emitting the reference clock and $F_1$ the frequency of a slave equipment, $\varepsilon_0$ and $\varepsilon_1$ the precision of the oscillator.

4. The synchronizing method according to one of claims 1 to 3, **characterized in that** it has a calibrating step comprising the following steps:

   when an equipment is incorporated into a network, it sends a message $M(EQ_i)$ containing the emission time $T_0$ to all the subscribers of the network,
   when the equipment $EQ_i$ that emits the message receives the message again, it compares the time contained in the message to the local time and determines the propagation time of the message between itself and a piece of equipment of the network,
   the equipment that wants to join the network stores the one or more computed propagation times to communicate with the other pieces of equipment, inverters, of the network.

5. The synchronizing method according to one of the preceding claims, **characterized in that** the reference clock Hm is emitted by an equipment that is initially designated master.

6. The synchronizing method according to claim 5, **characterized in that**, in case of loss of reception of the clock emitted by the master, an equipment having the highest priority in the network takes the role of master and uses its local clock as reference clock for the other equipments.

7. The synchronizing method according to one of claims 1 to 5, **characterized in that** the emitted command signal is a power provided by an inverter equipment adapted to provide energy to a rotating machine.

8. A system for synchronizing the emission of data between several equipments communicating with each other by means of a physical communication link, each equipment comprises at least the following elements:

• an emitter (221), a receiver (222), a counter (223) adapted for counting the local clock signals, a local clock, a memory (224) storing message propagation times, a processor (225) adapted to execute the steps of the method according to one of claims 1 to 7,
• an equipment being configured to play the role of master and to provide a reference clock.

9. The system according to claim 8, **characterized in that** an equipment is an inverter adapted to provide energy to a rotating machine.

FIG.1

FIG.2

FIG.3

FIG.4

**EP 3 617 820 B1**

## RÉFÉRENCES CITÉES DANS LA DESCRIPTION

**Documents brevets cités dans la description**

- US 7432674 B